# EUROPEAN PATENT SPECIFICATION

(11) **EP 4 284 058 B1**
(45) Date of publication and mention of the grant of the patent: **19.08.2026**
(21) Application number: 23711397.2
(22) Date of filing: 27.02.2023
(51) Int. Cl.: H04L 43/065, H04L 43/0852, H04W 24/08, H04W 28/02, H04W 24/10

(54) **ELECTRONIC DEVICE FOR TRANSMITTING MEASUREMENT REPORT INCLUDING DELAY TIME, ON BASIS OF PERFORMED SERVICE, AND OPERATING METHOD OF ELECTRONIC DEVICE**
ELEKTRONISCHE VORRICHTUNG ZUR ÜBERTRAGUNG EINES MESSBERICHTS MIT VERZÖGERUNGSZEIT AUF BASIS EINES DURCHGEFÜHRTEN DIENSTES UND BETRIEBSVERFAHREN EINER ELEKTRONISCHEN VORRICHTUNG
DISPOSITIF ÉLECTRONIQUE POUR LA TRANSMISSION D'UN RAPPORT DE MESURE, Y COMPRIS LE TEMPS DE RETARD, SUR LA BASE DU SERVICE EFFECTUÉ, ET PROCÉDÉ DE FONCTIONNEMENT DU DISPOSITIF ÉLECTRONIQUE

(30) Priority: 11.04.2022 KR 20220044814
(43) Date of publication of application: 29.11.2023
(73) Proprietor: Samsung Electronics Co., Ltd., Suwon-Si, Gyeonggi-do 16677 (KR)
(72) Inventor: KIM, Hyeonsoo, Suwon-si, Gyeonggi-do 16677 (KR)
(74) Representative: Gulde & Partner
(86) International application number: PCT/KR2023/002728
(87) International publication number: WO 2023/200113

(56) References cited:
- EP-A1- 3 796 699
- WO-A1-2020/186393
- US-A1- 2015 092 579
- US-A1- 2017 171 771
- US-A1- 2018 302 816
- US-A1- 2021 153 071
- US-A1- 2021 235 317
- US-A1- 2022 052 956
- US-A1- 2022 052 956
- US-B2- 10 524 149

## Description

### [Technical Field]

The disclosure relates to an electronic device and a method of operating an electronic device, and a technology for transmitting a measurement report including a delay time.

### [Background Art]

To meet the demand for wireless data traffic having increased since deployment of 4G communication systems, efforts have been made to develop an improved 5G system. Therefore, the 5G communication system is also called a "beyond 4G network" communication system or a "post LTE" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

The 5G mobile communication system can support a non-standalone (NSA) mode in which data are transmitted to or received from a base station of 4G cellular communication and a base station of 5G cellular communication, and a standalone (SA) mode in which data is transmitted to or received from a base station of 5G cellular communication. The 5G mobile communication system can implement a high transmission or reception rate by transmitting and/or receiving a signal in a higher frequency band than the 4G cellular communication system.

WO 2020/186393 A1 and US 2022/052956 A1 disclose conventional delay measurement management methods.

### [Disclosure of Invention]

### [Technical Problem]

When receiving configuration information including an indicator indicating that measurement and reporting of a delay time for data transmission are to be performed from a base station (BS) connected through cellular communication, an electronic device may measure the delay time and transmit a measurement report including the measured delay time to the BS. The BS may receive the measurement report and verify quality of communication provided to the electronic device on the basis of the delay time.

However, when the electronic device receives configuration information which does not include the indicator indicating that measurement and reporting of a delay time for data transmission are to be performed, the electronic device may not measure the delay time and not transmit the measurement report including the delay time to the BS, thereby the base station may have difficulty in allocating higher uplink grants. Accordingly, the BS may not identify the QoS of the service received by the electronic device.

Particularly, the electronic device may receive the relatively small size of an uplink grant required for maintaining the QoS of the uplink of the service being performed while the service requiring a short delay time is performed. A delay time spent for data transmission may further increase when an uplink grant having the small size is allocated. However, as the BS cannot identify the QoS of the service received by the electronic device, the uplink grant may not be increased. In this case, the quality of service received by the electronic device may deteriorate, which may prevent the quality of service from being improved.

### [Solution to Problem]

The invention is defined by the subject-matter of the independent claims. Preferred embodiments are set out in the dependent claims.

### [Advantageous Effects of Invention]

An electronic device and a method of operating an electronic device according to invention monitors a delay time on the basis of identification that an executed application is a predetermined application (or identification that a performed service is a predetermined service). When the delay time satisfies a predetermined condition, the electronic device may identify the average of the delay time and transmit a measurement reporting including the average of the delay time and DRB information used for data transmission to the BS. The measurement report transmitted to the BS may be used to increase uplink grants which the BS allocates to the electronic device.

Accordingly, the electronic device and the method of operating the electronic device may improve the quality of service performed by the electronic device.

Further, when it is identified that the executed application is the predetermined application (or the executed service is the predetermined service), the electronic device and the method of operating the electronic device may measure (or monitor) the delay time, and thus perform measurement and report of the delay time even through configuration information transmitted by the BS does not include an indicator indicating that measurement and reporting of a delay time for data transmission are to be performed. Therefore, the electronic device and the method of operating the electronic device may improve the quality of service performed by the electronic device.

### [Brief Description of Drawings]

FIG. 1 is a block diagram of an electronic device according to various embodiments.
FIG. 2 is a block diagram of an electronic device for supporting legacy network communication and 5G network communication according to various embodiments of the disclosure.
FIG. 3 illustrates an electronic device and a BS according to various embodiments of the disclosure.
FIG. 4 is a block diagram illustrating the electronic device according to a claimed embodiment of the disclosure.
FIG. 5 is a block diagram illustrating the electronic device according to a claimed embodiment of the disclosure.
FIG. 6 is a flowchart illustrating a method of operating an electronic device according to a claimed embodiment.
FIG. 7 is a flowchart illustrating a method of operating an electronic device according to a claimed embodiment.

### [Mode for the Invention]

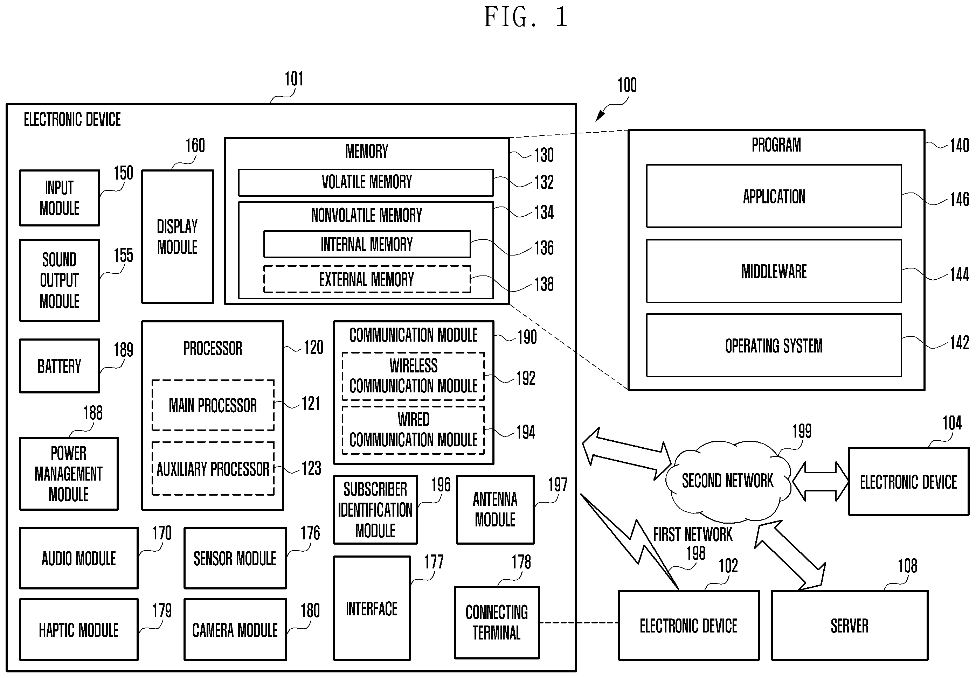

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

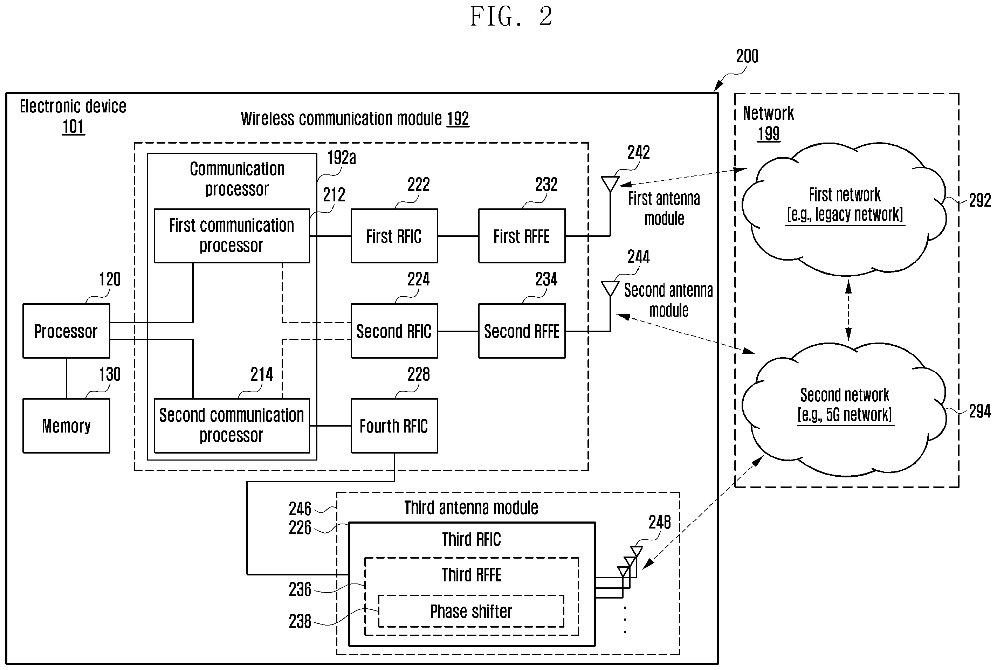

FIG. 2 is a block diagram illustrating an electronic device in a network environment including a plurality of cellular networks according to an embodiment of the disclosure. Referring to FIG. 2, the electronic device 101 may include a first communication processor 212, second communication processor 214, first RFIC 222, second RFIC 224, third RFIC 226, fourth RFIC 228, first radio frequency front end (RFFE) 232, second RFFE 234, first antenna module 242, second antenna module 244, and antenna 248. The electronic device 101 may include a processor 120 and a memory 130. A second network 199 may include a first cellular network 292 and a second cellular network 294. According to another embodiment, the electronic device 101 may further include at least one of the components described with reference to FIG. 1, and the second network 199 may further include at least one other network. According to one embodiment, the first communication processor 212, second communication processor 214, first RFIC 222, second RFIC 224, fourth RFIC 228, first RFFE 232, and second RFFE 234 may form at least part of the wireless communication module 192. According to another embodiment, the fourth RFIC 228 may be omitted or included as part of the third RFIC 226.

The first communication processor 212 may establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may establish a communication channel corresponding to a designated band (e.g., about 6 GHz to about 60 GHz) of bands to be used for wireless communication with the second cellular network 294, and support fifth generation (5G) network communication through the established communication channel. According to various embodiments, the second cellular network 294 may be a 5G network defined in 3rd generation partnership project (3GPP). Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to one embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to one embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to one embodiment, the first RFIC 222 and the second RFIC 224 may be implemented into at least part of a single package or a single chip. According to one embodiment, the first RFFE 232 and the second RFFE 234 may be implemented into at least part of a single package or a single chip. According to one embodiment, at least one of the first antenna module 242 or the second antenna module 244 may be omitted or may be combined with another antenna module to process RF signals of a corresponding plurality of bands.

According to one embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof; thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to one embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-stand alone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

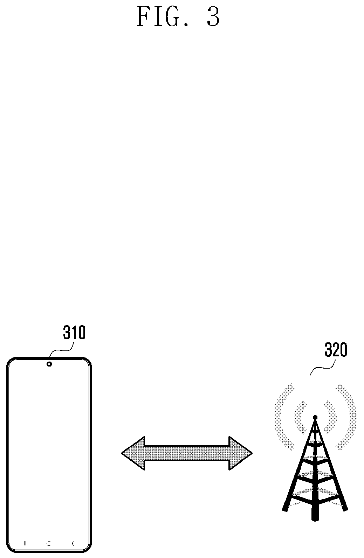

FIG. 3 illustrates an electronic device and a BS according to various embodiments of the disclosure.

A BS 320 may be a BS supporting first cellular communication. The first cellular communication may be one communication scheme among various cellular communication schemes supported by an electronic device 310 (for example, the electronic device 101 of FIG. 1). For example, the first cellular communication may be a communication scheme using a 5^{th} generation communication scheme (for example, new radio). According to an embodiment, the BS 320 may be a BS supporting a standalone mode supported by the first cellular communication. The standalone mode may be a mode in which the electronic device 310 transmits or receives data through a BS supporting the first cellular communication. The electronic device 310 may be connected to the BS 320 to transmit or receive data.

The electronic device 310 may be connected to the BS 320 through the first cellular communication to perform various services requiring cellular communication. The various services may be services provided by various applications (for example, a game application and a content reproduction application) stored in the electronic device 101.

According to an embodiment, the electronic device 310 may provide a video call (or voice call) service among the various services, and the electronic device 310 may transmit data to an external electronic device (for example, the electronic device 104 of FIG. 1) through a data radio bearer (DRB) provided by the BS 320 or receive data transmitted by the external electronic device 104.

The electronic device 310 may receive configuration information transmitted by the BS 320 and perform an operation related to a configuration of the first cellular communication on the basis of the configuration information. According to an embodiment, the electronic device 310 may identify whether an indicator indicating that measurement and reporting of a delay time for data transmission are to be performed is included in the configuration information transmitted by the BS 320. The electronic device 310 may identify that the indicator indicating that measurement and reporting of a delay time for data transmission are to be performed is included in the configuration information and measure the delay time.

The delay time may be a PDCP packet delay time corresponding to a time between a time point at which data to be transmitted is input into a packet data convergence protocol (PDCP) layer implemented in the electronic device 310 and a time point at which a media access control (MAC) layer corresponding to a lower layer of the PDCP layer acquires an uplink grant for data transmission (or a time point at which the MAC layer transmits data).

When measuring the delay time, the electronic device 310 may measure the delay time for each QCI (quality of service class identifier) of the service related to the data. For example, the electronic device 310 may measure all of a delay time for data transmission related to a service having a QCI of 1 and a delay time for data transmission related to a service having a QCI of 2.

When measuring the delay time, the electronic device 310 may measure the delay time for each data radio bearer (DRB) indicating a bearer for transmitting or receiving data. For example, the electronic device 310 may measure the delay time for data transmission related to a service using a first DRB and/or the delay time for data transmission related to a service using a second DRB while the electronic device 310 is connected to the BS 320 through a plurality of DRBs including the first DRB and the second DRB.

When the delay time satisfies a predetermined condition, the electronic device 310 may transmit a measurement report including the delay time to the BS 320. The predetermined condition may include a condition larger than or equal to a value (or a level) configured by the BS 320. The BS 320 may receive the measurement report transmitted by the electronic device 310 and identify the delay time included in the measurement report. The BS 320 may use the delay time to verify a QoS (quality of service) of the service provided to the electronic device 310. The delay time included in the measurement report is used only for verifying the QoS, but not used for improving the QoS.

The electronic device 310 may transmit data to the external electronic device 104 while performing a service requiring a short delay time (or a delay-sensitive service). The service requiring the short delay time may include an E2E (end-to-end) service or an MCPTT (mission critical push to talk) service, and, for example, a video call or a voice call may be included in the E2E service as a service for transmitting and/or receiving data in real time between the electronic device 101 and the external electronic device 104. Further, the service requiring the short delay time may also include a URLLC (ultra-reliable and low latency communication) service. The service requiring the short delay time may be designated by the electronic device 101 or an operator of the first cellular communication, or designated by a user of the electronic device 101.

Due to various causes, the BS 320 may not allocate enough uplink grants to smoothly perform the service performed by the electronic device 101, the uplink grants being resources which can be used by the electronic device 310 to transmit data. When enough uplink grants to smoothly perform the service performed by the electronic device 310 are not allocated, the electronic device 310 may have an increased delay time spent for data transmission and cannot perform the service. Particularly, when the service performed by the electronic device 310 is a service requiring the short delay time, the quality of service may deteriorate. Further, when the delay time exceeds a PDCP discard timer, data which should be transmitted may be discarded without being transmitted and it is difficult to perform the service. The electronic device 310 may have difficulty in smoothly performing the service until the BS 320 allocates enough uplink grants to smoothly perform the service performed by the electronic device 310. Further, when the configuration information transmitted by the BS 320 does not include the indicator, indicating that measurement and reporting of the delay time for data transmission are to be performed, or is configured to not measure the delay time, the electronic device 310 cannot measure and report the delay time and the BS 320 may cannot know the generation of a high delay time, thereby having difficulty in allocating higher uplink grants for maintaining the QoS of the uplink of the service being used by the electronic device 310.

Hereinafter, an embodiment for allocating relatively higher uplink grants improving the quality of service to satisfy the QoS of the uplink of the service being used by the electronic device 310 through measurement of the delay time of data and transmission of a measurement report including the delay time based on an application being executed and/or a service performed by the application is described.

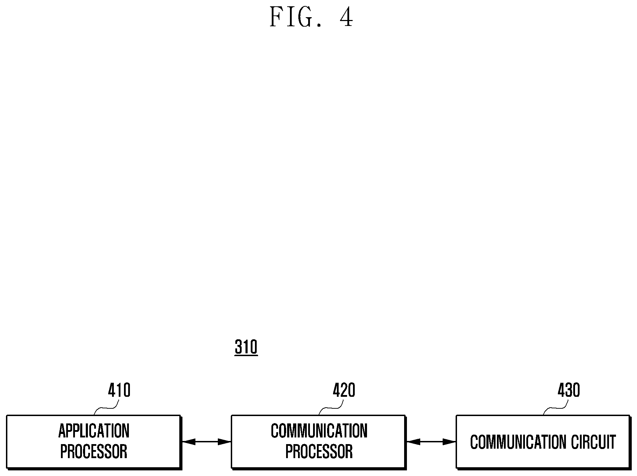

FIG. 4 is a block diagram illustrating the electronic device according to a claimed embodiment of the disclosure.

Referring to FIG. 4, an electronic device (for example, the electronic device 310 of FIG. 3) according to various embodiments of the disclosure includes an application processor 410 (for example, the processor 120 of FIG. 1), a communication processor 420 (for example, the first communication processor 212 of FIG. 2 and/or the second communication processor 242 of FIG. 2), and/or a communication circuit 430 (for example, the wireless communication module 192 of FIG. 1).

The application processor 410 may control various elements of the electronic device 101. The application processor 410 may execute an application non-transitorily or transitorily stored in a memory (for example, the memory 130 of FIG. 1) on the basis of a user input. The application processor 410 may control various elements related to a service in order to perform the service provided by the application. For example, when the application is a video call application, the application processor 410 may control a display (for example, the display device 160 of FIG. 1) to display an image received from an external electronic device (for example, the external electronic device 104 of FIG. 1) and control an audio module (for example, the audio module 170 of FIG. 1) to output audio data received from the external electronic device 104.

The application processor 410 may identify whether the executed application is a predetermined application in response to detection of execution of the application. The predetermined application may be an application performing a service requiring a relatively short delay time. For example, the predetermined application may be an application performing an E2E service (for example, a video call or a voice call). The predetermined application may be configured by a user of the electronic device 310, an operator of the first cellular communication, or a manufacturer of the electronic device 310.

The application processor 410 may identify whether the executed service is a predetermined service in response to detection of the performance of a specific service according to execution of the application. The predetermined service may be a service requiring a relatively short delay time. For example, the predetermined service may be an E2E service (for example, a video call or a voice call). The predetermined service may be configured by a user of the electronic device 310, an operator of the first cellular communication, or a manufacturer of the electronic device 310.

The application processor 410 may transmit information on the executed application (for example, identification information of the application), information on the service (for example, identification information of the service), and/or information on a first delay time required for performing the service to the communication processor 420 on the basis of identification that the executed application is the predetermined application or the performed service is the predetermined service.

The first delay time is a delay time required for performing the service requiring a relatively short delay time and may be implemented as a maximum value of the delay time or a range of the delay time. The delay time may be a PDCP packet delay time corresponding to a time between a time point at which data to be transmitted is input into a packet data convergence protocol (PDCP) layer implemented in the communication processor 420 of the electronic device 310 and a time point at which a MAC (media access control) layer corresponding to a lower layer of the PDCP layer acquires an uplink grant for data transmission (or a time point at which the MAC layer transmits data).

The communication processor 420 may transmit and/or receive data through the first cellular communication. The communication processor 420 may be connected to a BS (for example, the BS 320 of FIG. 3) through the first cellular communication. The communication processor 420 may transmit user data received from the application processor 410 though the first cellular communication and transmit user data received through the first cellular communication to the application processor 410.

The first cellular communication may be one of various cellular communication schemes supported by the electronic device 310 and may correspond to, for example, a communication scheme on the second cellular network 294 of FIG. 2. For example, the first cellular communication may be a communication scheme using a 5^{th} generation communication scheme (for example, new radio).

The communication circuit 430 is a communication circuit supporting the first cellular communication and may provide communication with an external electronic device (for example, the external electronic device 104 of FIG. 1) to the electronic device 310 through the first cellular communication.

The communication processor 420 receives the information on the application (or the information on the service) and/or the information on the first delay time from the application processor 410. The communication processor 420 may identify (or monitor) the delay time required for data transmission related to a predetermined service on the basis of reception of the information on the application (or the information on the service) and/or the information on the first delay time. Upon receiving the information on the application (or the information on the service) and/or the information on the first delay time from the application processor 410, the communication processor 420 may perform a series of operations of identifying the delay time and/or transmitting a measurement report including the delay time to the BS 320 regardless of whether the indicator indicating that measurement and reporting of the delay time for data transmission are to be performed is included in the configuration information transmitted by the BS.

The communication processor 420 may identify a data radio bearer (DRB) which is a bearer for transmitting and/or receiving data related to the service on the basis of the information on the application and/or the information on the service. The communication processor 420 may perform a series of operations of identifying the delay time of the identified DRB.

The communication processor 420 may determine that a difference between a time at which the data to be transmitted through the identified DRB is input into the PDCP layer and a time at which scheduling for transmission is performed by the MAC layer is the delay time of the identified DRB.

The communication processor 420 may compare the delay time of the identified DRB with a first time determined on the basis of the first delay time and determine whether to identify an average of the delay time generated by transmission of data related to the service on the basis of the comparison result.

The first time may be a time configured by the communication processor 420 on the basis of the first delay time. For example, the first time may be configured to increase as the first delay time increases and may be configured to decrease as the first delay time decreases. For example, the first time may be configured to have the size corresponding to half the first delay time. When the application or the service requires a relatively shorter delay time, the first delay time may be configured to be smaller and the first time may also be configured to be smaller.

The communication processor 420 may perform an operation of comparing the delay time of the identified DRB with the first time determined on the basis of the first delay time according to a predetermined cycle. The predetermined cycle may be configured by the electronic device 310 (or the communication processor 420) and may have various sizes. The communication processor 420 may reduce the predetermined cycle in a high-performance mode in which the quality of service can be improved. The communication processor 420 may increase the predetermined cycle in a power-saving mode in which power consumption of the electronic device 310 is reduced. The predetermined cycle configured to have the same size as the first time may be configured as a cycle having the same size as the first time in order to reduce power consumption by the operation of comparing the delay time with the first time.

The communication processor 420 may identify an average of the delay time generated by transmission of data related to the service on the basis of identification that the delay time of the identified DRB is longer than or equal to the first time determined on the basis of the first delay time. A situation in which the delay time of the identified DRB is longer than or equal to the first time determined on the basis of the first delay time may mean a situation in which there is a possibility of generation of a delay time higher than the delay time required for performing the predetermined service.

The communication processor 420 may not perform the operation of identifying the average of the delay time generated by transmission of data related to the service on the basis of identification that the delay time of the identified DRB is shorter than (or equal to) the first time determined on the basis of the first delay time. A situation in which the delay time of the identified DRB is shorter than (or equal to) the first time determined on the basis of the first delay time may mean a situation in which a possibility of generation of a delay time higher than the delay time required for performing the predetermined service is short.

The communication processor 420 may compare the delay time of the identified DRB with the first time determined on the basis of the first delay time and determine whether to identify the average of the delay time generated by transmission of data related to the service on the basis of the comparison result, thereby reducing power consumption generated by the identification of the average of the delay time.

The communication processor 420 may identify an average of the delay time generated by transmission of data related to the service on the basis of identification that the delay time of the identified DRB is longer than or equal to the first time determined on the basis of the first delay time. The communication processor 420 may identify a delay time for a second time determined on the basis of the first delay time and identify an average of the identified delay time.

The second time is a time configured by the communication processor 420 on the basis of the first delay time and may be a period during which the average of the delay time is identified. For example, the second time may be configured to increase as the first delay time increases and may be configured to decrease as the first delay time decreases. For example, the second time may be configured to have the size of multiples of the first delay time (for example, 5 times). When the application or the service requires a relatively shorter delay time, the first delay time may be configured to be smaller and the second time may also be configured to be smaller.

The average of the delay time measured for the second time by the communication processor 420 may be UL PDCP packet average delay defined in 3GPP TS 38.314 Version 16.3.0 (Release 16).

For example, the communication processor 420 may identify (or calculate) the average of the delay time on the basis of an equation defined in Table 4.3.1.1-1 and Table 4.3.1.1-2 of 3GPP TS 38.314 Release 16.

The communication processor 420 may identify whether the average of the identified (or calculated) delay time satisfies a predetermined condition and determine whether to transmit a measurement report including the average of the delay time and DRB information on the basis of whether the average of the delay time satisfies the predetermined condition.

The predetermined condition may include a condition indicating that the average of the delay time is larger than a predetermined value. The predetermined value is a value determined on the basis of the first delay time, and may be configured to, for example, increase as the first delay time increases and decrease as the first delay time decreases. For example, the predetermined value may be configured to have the size corresponding to half the first delay time. When the application or the service requires a relatively shorter delay time, the first delay time may be configured to be shorter and the predetermined value may also be configured to be shorter. Satisfying the predetermined condition may mean a situation in which a larger uplink grant is required since there is a possibility of the generation of a delay time longer than the delay time required to perform the service provided by the application.

The communication processor 420 may determine to transmit a measurement report including the average of the delay time and DRB information on the basis of the identified (calculated) average of the delay time satisfying the predetermined condition and control the communication circuit 430 to transmit the measurement report including the average of the delay time and the DRB information.

The DRB corresponding to the DRB information included in the measurement report may be a DRB to which a larger uplink grant is allocated. The BS 320 receiving the measurement report including the average of the delay time and the DRB information may perform an operation of allocating larger uplink grants to the electronic device 310 on the basis of the measurement report, and the electronic device 310 may implement reduction of the delay time by transmitting data through the larger (successive) uplink grants for maintaining the QoS of the uplink of the service used by the electronic device 310.

Through the above-described scheme, even though the indicator indicating that measurement and reporting of the delay time for data transmission are to be performed is not included in configuration information transmitted by the BS 320, the electronic device 310 may transmit the measurement report including the average of the delay time and the DRB information to the BS 320 and thus may implement allocation of larger (or successive) uplink grants for maintaining/improving the QoS of the uplink of the service used by the electronic device 310.

The application processor 410 may control the communication processor 420 to transmit and/or receive data on the basis of identification that the executed application is not the predetermined application or the performed service is not the predetermined service without applying the above-described embodiments. When the indicator indicating that measurement and reporting of the delay time for data transmission are to be performed is not included in the configuration information transmitted by the BS 320, the communication processor 420 may not transmit the measurement report including the delay time. When the measured delay time is longer than or equal to a predetermined value (for example, a PDCP discard timer), the communication processor 420 may discard data to be transmitted without transmission of the data.

When the identified (or calculated) average of the delay time does not satisfy the predetermined condition, the communication processor 420 may perform an operation of identifying whether the delay time measured every hour is longer than a first time.

The above-described embodiments are implemented on the assumption that data related to one service (or application) is transmitted through one DRB, but the disclosure is not limited thereto. According to an embodiment, the communication processor 420 may receive delay time required to perform a smooth service by a plurality of applications (or services) from the application processor 410 in the state in which data related to the plurality of applications (services) is transmitted through one DRB. The communication processor 420 may configure the shortest delay time among the plurality of delay times as a first delay time and apply the same to the above embodiment. For example, the communication processor 420 may receive a delay time required by a first application and a delay time required by a second application from the application processor 410. The communication processor 420 may configure a shorter time among the delay time required by the first application and the delay time required by the second application as the first delay time.

The above-described embodiments are implemented on the assumption that data related to one service (or application) is transmitted through one DRB, but the disclosure is not limited thereto. The above-described embodiments may be applied to each of a plurality of DRBs in the state in which the electronic device 310 transmits and/or receives data through the plurality of DRBs. For example, when the electronic device 310 transmits and/or receives data related to the first application requiring a short delay time through a first DRB and transmits and/or receives data related to the second application requiring a short delay time through a second DRB, the electronic device 310 may identify an average delay time of the data transmitted through the first DRB and an average delay time of the data transmitted through the second DRB, transmit the average delay time of the data transmitted through the first DRB and information on the first DRB to the BS 320, and transmit the average delay time of the data transmitted through the second DRB and information on the second DRB to the BS 320 (or another BS).

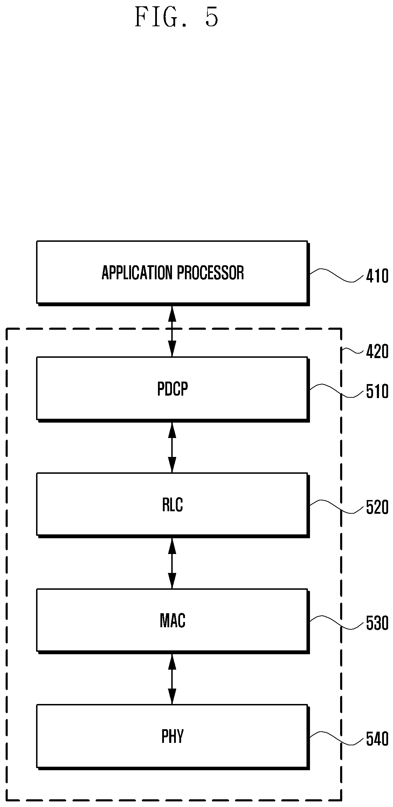

FIG. 5 is a block diagram illustrating the electronic device according to a claimed embodiment of the disclosure.

A communication processor (for example, the communication processor 420 of FIG. 4) of an electronic device (for example, the electronic device 310 of FIG. 4) according to various embodiments of the disclosure may include a plurality of software layers for data communication. For example, a communication processor (for example, the first communication processor 212 or the second communication processor 214 of FIG. 2) included in the wireless communication module 192 may execute and provide the plurality of software layers. The plurality of software layers may include at least one entity.

Referring to FIG. 5, a user plane protocol (not shown) for processing transmitted and received data and a control plane protocol (not shown) for processing a control signal for data communication may be executed in the communication processor 420.

The user plane protocol may include a packet data convergence protocol (PDCP) layer 510, a radio layer control (RLC) layer 520, a media access control (MAC) layer 530, and a physical layer 540. Various entities 510, 520, 530, and 540 implemented in the communication processor 420 may be operatively connected to the application processor 410 to perform various operations for receiving data in a packet form generated by the application processor 410 and transmitting packets to an external electronic device (for example, the electronic device 104 of FIG. 1) through a base station (for example, the BS 320 of FIG. 3) providing a communication network (for example, the first cellular communication) between the electronic device 101 and the external electronic device 104.

According to various embodiments of the disclosure, the application processor 410 may perform various processings for data (for example, media data) to be transmitted to the external electronic device 104.

According to an embodiment, in the state in which media data should be transmitted to the external electronic device 104, the application processor 410 may process encoding for the media data, convert the encoded data into a plurality of packets, and process encoding of the converted packets. The application processor 410 may transmit the processed data to the user plane protocol.

According to an embodiment, the packet generated by the application processor 410 may be a packet related to the service requiring a short delay time by packet transmission or reception. For example, the packet generated by the application processor 410 may be a packet related to a voice call service or a video call service which is a service requiring the minimum delay time by packet transmission or reception.

According to various embodiments of the disclosure, the PDCP entity 510 may receive data transmitted by the application processor 410 and generate data units by dividing the received data into data in predetermined size. The PDCP entity 510 may assign a sequence number to each of the data units. The PDCP entity 510 may transmit the generated data units to the RLC layer 520.

According to various embodiments of the disclosure, the RLC entity 520 may perform various operations for data transmitted by the PDCP entity 510.

According to various embodiment of the disclosure, the RIC entity 520 may identify sequence numbers of a plurality of pieces of data included in the data (for example, RLC SDUs) transmitted by the PDCP entity 510 and concatenate, divide, or reassemble the data to be the size which can be received by the MAC entity 530. The RLC entity 520 may transmit data generated by adding an RLC header to the concatenated, divided, or reassembled data to the MAC layer 530.

According to various embodiments of the disclosure, the MAC entity 530 may perform an operation of checking an error of data (MAC SDUs) transmitted by the RLC entity 520 or data received from the PHY entity 540 transmitting or receiving data through a radio channel or various operations of processing data received from the physical (PHY) layer.

According to various embodiments of the disclosure, the MAC entity 530 may perform an operation of selecting an appropriate transport channel to transmit data received by the RLC entity 520 and adding required control information to the data received by the RLC entity 520. The MAC entity 530 may perform scheduling of data to be transmitted to the BS 320 on the basis of the uplink grant allocated by the BS 320.

According to various embodiments of the disclosure, the PHY entity 540 may perform various operations (for example, encoding, modulation, or resource allocation) for transmitting data transmitted by the MAC entity 530 to the external electronic device 104 and transmit data to the BS 320. The BS 320 may transmit the received data to the external electronic device 104.

The PDCP layer 510 may receive information on the application (or information on the service) and/or information on the first delay time from the application processor 410. The PDCP layer 510 may identify (or monitor) the delay time spent for data transmission related to a predetermined service on the basis of reception of the information on the application (or the information on the service) or the information on the first delay time.

The PDCP layer 510 may identify a data radio bearer (DRB) which is a bearer for transmitting and/or receiving data related to the service on the basis of the information on the application and/or the information on the service. The PDCP layer 510 may perform a series of operations for identifying the delay time of the identified DRB.

The PDCP layer 510 may determine that a difference between a time at which the data to be transmitted through the identified DRB is input into the PDCP layer and a time at which scheduling for transmission is performed by the MAC layer 530 is the delay time of the identified DRB.

The PDCP layer 510 may compare the delay time of the identified DRB with the first time determined on the basis of the first delay time and determine whether to identify the average of the delay time generated by transmission of data related to the service on the basis of the comparison result.

The first time may be a time configured by the PDCP layer 510 on the basis of the first delay time. For example, the first time may be configured to increase as the first delay time increases and may be configured to decrease as the first delay time decreases.

The PDCP layer 510 may perform an operation of comparing the delay time of the identified DRB with the first time determined on the basis of the first delay time according to a predetermined cycle. The predetermined cycle may be configured by the electronic device 310 (or the communication processor 420) and may have various sizes. The communication processor 420 may reduce the predetermined cycle in a high-performance mode in which the quality of service can be improved. The communication processor 420 may increase the predetermined cycle in a power-saving mode in which power consumption of the electronic device 310 is reduced. The predetermined cycle configured to have the same size as the first time may be configured as a cycle having the same size as the first time in order to reduce power consumption by the operation of comparing the delay time with the first time.

The PDCP layer 510 may identify the average of the delay time generated by transmission of the data related to the service on the basis of identification that the delay time of the identified DRB is larger than or equal to the first time determined on the basis of the first delay time.

The PDCP layer 510 may compare the delay time of the identified DRB with the first time determined on the basis of the first delay time and determine whether to identify the average of the delay time generated by transmission of data related to the service on the basis of the comparison result, thereby reducing power consumption generated through the identification of the average of the delay time.

The PDCP layer 510 may identify the average of the delay time generated by transmission of the data related to the service on the basis of identification that the delay time of the identified DRB is larger than or equal to the first time determined on the basis of the first delay time. The PDCP layer 510 may identify the delay time for a second time determined on the basis of the first delay time and identify the average of the identified delay time.

The second time is a time configured by the PDCP layer 510 on the basis of the first delay time and may be a time period during which the average of the delay time is identified. For example, the second time may be configured to increase as the first delay time increases and may be configured to decrease as the first delay time decreases.

The PDCP layer 510 may identify whether the identified (or calculated) average of the delay time satisfies a predetermined condition and determine whether to transmit a measurement report including the average of the delay time and DRB information on the basis of whether the average of the delay time satisfies the predetermined condition.

The predetermined condition may include a condition indicating that the average of the delay time is larger than a predetermined value. The predetermined value is a value determined on the basis of the first delay time, and may be configured to, for example, increase as the first delay time increases and decrease as the first delay time decreases. For example, the predetermined value may be configured to have the size corresponding to half the first delay time. When the application or the service requires a relatively shorter delay time, the first delay time may be configured to be smaller and the predetermined value may also be configured to be smaller. Satisfying the predetermined condition may mean a situation in which larger (or successive) uplink grants for maintaining the QoS of the uplink of the service used by the electronic device 310 are required since there is a possibility of the generation of a delay time longer than the delay time required to perform the service provided by the application
The PDCP layer 510 may determine to transmit a measurement report including the average of the delay time and DRB information on the basis of the identified (calculated) average of the delay time satisfying the predetermined condition and control the PHY layer 540 to transmit the measurement report including the average of the delay time and the DRB information.

DRBs corresponding to the DRB information included in the measurement report may be DRBs to which larger (or successive) uplink grants for maintaining the QoS of the uplink of the service being used by the electronic device 310 are allocated. The BS 320 receiving the measurement report including the average of the delay time and the DRB information may perform an operation of allocating the larger uplink grants to the electronic device 310 on the basis of the measurement report, and the electronic device 310 may transmit data through the larger uplink grants, thereby implementing reduction in the delay time.

Through the above-described scheme, even though the indicator indicating that measurement and reporting of the delay time for data transmission are to be performed is not included in configuration information transmitted by the BS 320, the electronic device 310 may transmit the measurement report including the average of the delay time and the DRB information to the BS 320 and thus may implement allocation of larger uplink grants.

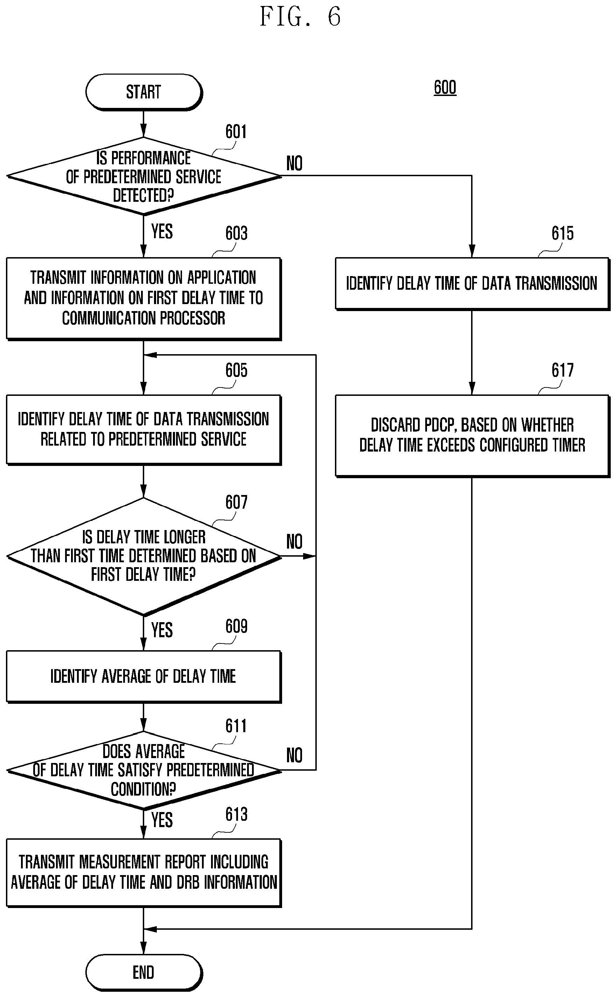

FIG. 6 is a flowchart illustrating a method 600 of operating an electronic device according to a claimed embodiment.

Referring to FIG. 6, an electronic device (for example, the electronic device 310 of FIG. 3) may identify whether a predetermined service is performed or execution of an application for performing the predetermined service is detected in operation 601.

The electronic device 310 may identify whether the application executed in response to detection of the execution of the application is a predetermined application. The predetermined application may be an application performing a service requiring a relatively short delay time. For example, the predetermined application may be an application performing an E2E service (for example, a video call or a voice call). The predetermined application may be configured by a user of the electronic device 310, an operator of the first cellular communication, or a manufacturer of the electronic device 310.

The electronic device 310 may identify whether the performed service is the predetermined service in response to detection of a specific service according to execution of the application. The predetermined service may be a service requiring a relatively short delay time. For example, the predetermined service may be an E2E service (for example, a video call or a voice call). The predetermined service may be configured by a user of the electronic device 310, an operator of the first cellular communication, or a manufacturer of the electronic device 310.

The electronic device 310 transmits information on the application and information on the first delay time to a communication processor (for example, the communication processor 420 of FIG. 4) in response to detection of performance of the predetermined service (or detection of execution of the application for performing the predetermined service) (operation 601-Y) in operation 603.

The first delay time is a delay time required for performing the service requiring a relatively short delay time and may be implemented as a maximum value of the delay time or a range of the delay time. The delay time may be a PDCP packet delay time corresponding to a time between a time point at which data to be transmitted is input into a packet data convergence protocol (PDCP) layer implemented in the communication processor 420 of the electronic device 310 and a time point at which a media access control (MAC) layer corresponding to a lower layer of the PDCP layer 510 (for example, the MAC layer 530 of FIG. 5) acquires an uplink grant for data transmission (or a time point at which the MAC layer transmits data).

The electronic device 310 may identify a delay time of transmission of data related to the predetermined service in operation 605.

The electronic device 310 may identify (or monitor) the delay time spent for data transmission related to the predetermined service on the basis of reception of information on the application (or information on the service) and/or information on the first delay time. Upon receiving the information on the application (or the information on the service) and/or the information on the first delay time, the electronic device 310 may perform a series of operations of identifying the delay time and/or transmitting a measurement report including the delay time to the BS 320 regardless of whether an indicator indicating that measurement and reporting of the delay time for data transmission are to be performed is included in configuration information transmitted by the BS.

The electronic device 310 may identify a data radio bearer (DRB) which is a bearer for transmitting and/or receiving data related to the service on the basis of the information on the application and/or the information on the service. The electronic device 310 may perform a series of operations of identifying the delay time of the identified DRB.

The electronic device 310 may determine that a difference between a time at which the data to be transmitted through the identified DRB is input into the PDCP layer and a time at which scheduling for transmission is performed by the MAC layer is the delay time of the identified DRB.

The electronic device 310 identifies whether the delay time identified in operation 605 is longer than a first time determined on the basis of the first delay time in operation 607.

The electronic device 310 compares the delay time of the identified DRB with the first time determined on the basis of the first delay time and determine whether to identify an average of the delay time generated by transmission of data related to the service on the basis of the comparison result.

The first time may be a time configured by the communication processor 420 on the basis of the first delay time. For example, the first time may be configured to increase as the first delay time increases and may be configured to decrease as the first delay time decreases. For example, the first time may be configured to have the size corresponding to half the first delay time. When the application or the service requires a relatively shorter delay time, the first delay time may be configured to be smaller and the first time may also be configured to be smaller.

The electronic device 310 may perform an operation of comparing the delay time of the identified DRB with the first time determined on the basis of the first delay time according to a predetermined cycle. For example, the predetermined cycle may be a cycle having the size which is the same as the first time.

The electronic device 310 may identify (operation 605) the delay time of data transmission related to the predetermined service on the basis of the delay time identified in operation 605, which is shorter than the first time determined on the basis of the first delay time (operation 607-N).

The electronic device 310 may identify the average of the delay time generated by data transmission related to the service on the basis of identification that the delay time of the identified DRB is longer than or equal to the first time determined on the basis of the first delay time. A situation in which the delay time of the identified DRB is longer than or equal to the first time determined on the basis of the first delay time may mean a situation in which there is a possibility of generation of a delay time higher than the delay time required for performing the predetermined service.

The electronic device 310 may not perform an operation of identifying the average of the delay time generated by data transmission related to the service on the basis of identification that the delay time of the identified DRB is shorter than (or equal to) the first time determined on the basis of the first delay time. A situation in which the delay time of the identified DRB is shorter than (or equal to) the first time determined on the basis of the first delay time may mean a situation in which a possibility of generation of a delay time higher than the delay time required for performing the predetermined service is short.

The electronic device 310 may compare the delay time of the identified DRB with the first time determined on the basis of the first delay time and determine whether to identify the average of the delay time generated by data transmission related to the service on the basis of the comparison result, thereby reducing power consumption by identification of the average of the delay time.

The electronic device 310 identifies the average of the delay time on the basis of the first delay time identified in operation 605, which is longer than the first time determined on the basis of the first delay time (operation 607-Y) in operation 609.

The electronic device 310 may identify the average of the delay time generated by data transmission related to the service on the basis of identification that the delay time of the identified DRB is longer than or equal to the first time determined on the basis of the first delay time. The electronic device 310 may identify the delay time for a second time determined on the basis of the first delay time and identify the average of the identified delay time.

The second time is a time configured by the communication processor 420 on the basis of the first delay time and may be a period during which the average of the delay time is identified. For example, the second time may be configured to increase as the first delay time increases and may be configured to decrease as the first delay time decreases. For example, the second time may be configured to have the size of multiples of the first delay time (for example, 5 times). When the application or the service requires a relatively shorter delay time, the first delay time may be configured to be smaller and the second time may also be configured to be smaller.

The average of the delay time measured by the electronic device 310 for the second time may be UL PDCP packet average delay defined in 3GPP TS 38.314 Version 16.3.0 (Release 16).

For example, the electronic device 310 may identify (or calculate) the average of the delay time on the basis of an equation defined in Table 4. 3.1.1-1 and Table 4.3.1.1-2 of 3GPP TS 38.314 Release 16.

The electronic device 310 may identify whether the average of the delay time satisfies a predetermined condition in operation 611.

The predetermined condition may include a condition indicating that the average of the delay time is larger than a predetermined value. The predetermined value is a value determined on the basis of the first delay time, and may be configured to, for example, increase as the first delay time increases and decrease as the first delay time decreases. For example, the predetermined value may be configured to have the size corresponding to half the first delay time. When the application or the service requires a relatively shorter delay time, the first delay time may be configured to be smaller and the predetermined value may also be configured to be smaller. Satisfying the predetermined condition may mean a situation in which a larger uplink grant is required since there is a possibility of the generation of a delay time longer than the delay time required to perform the service provided by the application.

The electronic device 310 may identify (operation 605) the delay time of data transmission related to the predetermined service on the basis of the average of the delay time which does not satisfy the predetermined condition (operation 611-N).

The electronic device 310 may transmit the measurement report including the average of the delay time and the DRB information to the BS 320 on the basis of the average of the delay time satisfying the predetermined condition (operation 611-Y) in operation 613.

The electronic device 310 may determine to transmit the measurement report including the average of the delay time and the DRB information on the basis of the identified (calculated) average of the delay time satisfying the predetermined condition and control the communication circuit 430 to transmit the measurement report including the average of the delay time and the DRB information.

The DRB corresponding to the DRB information included in the measurement report may be a DRB to which a larger uplink grant is allocated. The BS 320 receiving the measurement report including the average of the delay time and the DRB information may perform an operation of allocating the larger uplink grants to the electronic device 310 on the basis of the measurement report, and the electronic device 310 may transmit data through the larger uplink grants, thereby implementing reduction in the delay time.

Through the above-described scheme, even though the indicator indicating that measurement and reporting of the delay time for data transmission are to be performed is not included in configuration information transmitted by the BS 320, the electronic device 310 may transmit the measurement report including the average of the delay time and the DRB information to the BS 320 and thus may implement allocation of larger uplink grants.

The electronic device 310 may identify the delay time of data transmission in response to detection of performance of a service other than the predetermined service (operation 601-N) in operation 615.

The electronic device 310 may control the communication processor 420 to transmit and/or receive data on the basis of identification that the executed application is not the predetermined application or the performed service is not the predetermined service without applying the above-described embodiments. When the indicator indicating that measurement and reporting of the delay time for data transmission are to be performed is not included in the configuration information transmitted by the BS 320, the communication processor 420 may not transmit the measurement report including the delay time. When the measured delay time is longer than or equal to a predetermined value (for example, a PDCP discard timer), the electronic device 310 may discard data to be transmitted without transmitting the same.

The electronic device 310 may perform a PDCP discard operation on the basis whether the delay time exceeds a configured timer in operation 617.

When the measured delay time is longer than or equal to a predetermined value (for example, a PDCP discard timer), the electronic device 310 may discard data to be transmitted without transmission of the data.

An electronic device according to various embodiments of the disclosure may include: a communication circuit configured to transmit data to a network through cellular communication or receive data; an application processor; and a communication processor, wherein the communication processor may be configured to receive information on one or more predetermined applications and information on a first delay time required to perform one or more predetermined services by the predetermined applications from the application processor, determine whether to identify an average of a delay time generated by transmission of data related to the services, based on a result of comparison between a delay time generated by transmission of the data related to the predetermined services through at least one data radio bearer (DRB) and a first time determined based on the first delay time, identify the average of the delay time, based on determination to identify the average, and determine whether to transmit a measurement report including the average of the delay time and DRB information, based on whether the average satisfies a predetermined condition.

In the electronic device according to various embodiments of the disclosure, the communication processor may be configured to identify the average of the delay time generated by transmission of the data related to the services through at least one data radio bearer (DRB), based on identification that the delay time generated by transmission of the data related to the predetermined services is longer than the first time determined based on the first delay time.

In the electronic device according to various embodiments of the disclosure, the communication processor may be configured to identify the average of the delay time generated by transmission of the data related to the services for a second time determined based on the first delay time.

In the electronic device according to various embodiments of the disclosure, the communication processor may be configured to reduce the second time as the first delay time decreases.

In the electronic device according to various embodiments of the disclosure, the communication processor may be configured to reduce the first time as the first delay time decreases.

In the electronic device according to various embodiments of the disclosure, the predetermined condition may include a condition indicating that the average of the delay time is larger than a predetermined value, and the predetermined value may be determined based on the first delay time.

In the electronic device according to various embodiments of the disclosure, the application processor may be configured to identify whether the executed application is the predetermined application, and transmit the information on the predetermined application and the first delay time to the communication processor, based on identification that the executed application is the predetermined application
In the electronic device according to various embodiments of the disclosure, the communication processor may be configured to, in case that predetermined services using the DRB are plural, select a shortest delay time among delay time required to perform the plurality of predetermined services, and determine the first time, based on the selected delay time.

In the electronic device according to various embodiments of the disclosure, the communication processor may be configured to identify a delay time generated by transmission of data related to another service while the another service, which is not the predetermined service, is transmitted through the DRB, and discard transmission of the data, based on the identified delay time exceeding a configured time (PDCP discard timer).

In the electronic device according to various embodiments of the disclosure, the predetermined service may include a service requiring a relatively short delay time.

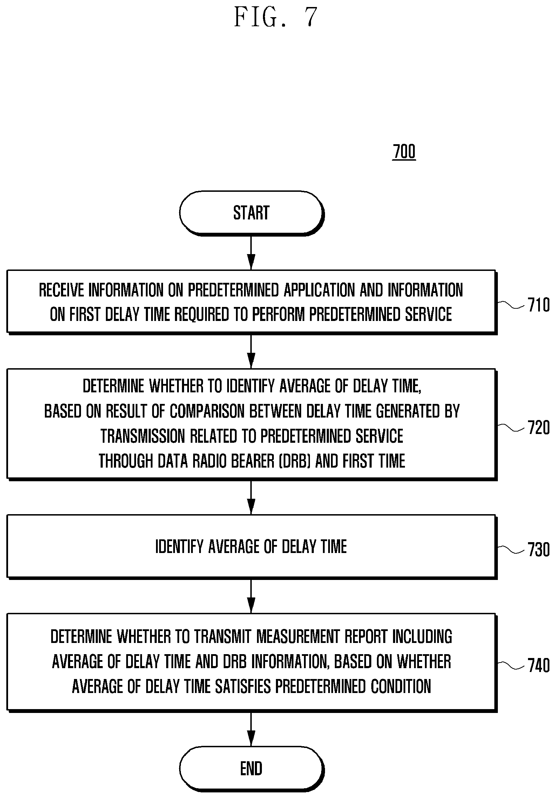

FIG. 7 is a flowchart illustrating a method 700 of operating an electronic device according to a claimed embodiment.

An electronic device (for example, the electronic device 310 of FIG. 4) (or a communication processor (for example, the communication processor 420 of FIG. 4)) receives information on a predetermined application and information on a first delay time required to perform a predetermined service from an application processor (for example, the application processor 410 of FIG. 4) in operation 710.

The electronic device 310 may identify whether the application executed in response to detection of the execution of the application is a predetermined application. The predetermined application may be an application performing a service requiring a relatively low delay time. For example, the predetermined application may be an application performing an E2E service (for example, a video call or a voice call). The predetermined application may be configured by a user of the electronic device 310, an operator of the first cellular communication, or a manufacturer of the electronic device 310.

The electronic device 310 may identify whether the performed service is the predetermined service in response to detection of a specific service according to execution of the application. The predetermined service may be a service requiring a relatively low delay time. For example, the predetermined service may be an E2E service (for example, a video call or a voice call). The predetermined service may be configured by a user of the electronic device 310, an operator of the first cellular communication, or a manufacturer of the electronic device 310.

The electronic device 310 may transmit information on the application and information on the first delay time to the communication processor (for example, the communication processor 420 of FIG. 4) in response to detection of performance of the predetermined service (or detection of execution of the application performing the predetermined service).

The first delay time is a delay time required for performing the service requiring a relatively low delay time and may be implemented as a maximum value of the delay time or a range of the delay time. The delay time may be a PDCP packet delay time corresponding to a time between a time point at which data to be transmitted is input into a packet data convergence protocol (PDCP) layer (for example, the PDCP layer 510 of FIG. 5) implemented in the communication processor 420 of the electronic device 310 and a time point at which a media access control (MAC) layer corresponding to a lower layer of the PDCP layer 510 (for example, the MAC layer 530 of FIG. 5) acquires an uplink grant for data transmission (or a time point at which the MAC layer transmits data).

The electronic device 310 determines whether to identify the average of the delay time on the basis of the result of comparison between the delay time generated by transmission of data related to the predetermined service through a data radio bearer (DRB) and a first time determined based on the first delay time in operation 720.

The electronic device 310 may identify (or monitor) the delay time spent for data transmission related to the predetermined service on the basis of reception of information on the application (or information on the service) and/or information on the first delay time. Upon receiving the information on the application (or the information on the service) and/or the information on the first delay time, the electronic device 310 may perform a series of operations of identifying the delay time and/or transmitting a measurement report including the delay time to the BS 320 regardless of whether an indicator indicating that measurement and reporting of the delay time for data transmission are to be performed is included in configuration information transmitted by the BS.

The electronic device 310 may identify a data radio bearer (DRB) which is a bearer for transmitting and/or receiving data related to the service on the basis of the information on the application and/or the information on the service. The electronic device 310 may perform a series of operations of identifying the delay time of the identified DRB.

The electronic device 310 may determine that a difference between a time at which the data to be transmitted through the identified DRB is input into the PDCP layer and a time at which scheduling for transmission is performed by the MAC layer is the delay time of the identified DRB.

The electronic device 310 may compare the delay time of the identified DRB with the first time determined on the basis of the first delay time and determine whether to identify an average of the delay time generated by transmission of data related to the service on the basis of the comparison result.

The first time may be a time configured by the communication processor 420 on the basis of the first delay time. For example, the first time may be configured to increase as the first delay time increases and may be configured to decrease as the first delay time decreases. For example, the first time may be configured to have the size corresponding to half the first delay time. When the application or the service requires a relatively lower delay time, the first delay time may be configured to be smaller and the first time may also be configured to be smaller.

The electronic device 310 may perform an operation of comparing the delay time of the identified DRB with the first time determined on the basis of the first delay time according to a predetermined cycle. For example, the predetermined cycle may be a cycle having the size which is the same as the first time.

The electronic device 310 may identify again the delay time of data transmission related to the predetermined service on the basis of the delay time shorter than the first time determined on the first delay time.

The electronic device 310 may identify the average of the delay time generated by data transmission related to the service on the basis of identification that the delay time of the identified DRB is longer than or equal to the first time determined on the basis of the first delay time. A situation in which the delay time of the identified DRB is longer than or equal to the first time determined on the basis of the first delay time may mean a situation in which there is a possibility of generation of a delay time higher than the delay time required for performing the predetermined service.

The electronic device 310 may not perform an operation of identifying the average of the delay time generated by data transmission related to the service on the basis of identification that the delay time of the identified DRB is shorter than (or equal to) the first time determined on the basis of the first delay time. A situation in which the delay time of the identified DRB is lower than or equal to the first time determined on the basis of the first delay time may mean a situation in which a possibility of generation of a delay time higher than the delay time required for performing the predetermined service is low.

The electronic device 310 may compare the delay time of the identified DRB with the first time determined on the basis of the first delay time and determine whether to identify the average of the delay time generated by data transmission related to the service on the basis of the comparison result, thereby reducing power consumption by identification of the average of the delay time.

The electronic device 310 identifies the average of the delay time in operation 730.

The electronic device 310 may identify the average of the delay time generated by data transmission related to the service on the basis of identification that the delay time of the identified DRB is longer than or equal to the first time determined on the basis of the first delay time. The electronic device 310 may identify the delay time for a second time determined on the basis of the first delay time and identify the average of the identified delay time.

The second time is a time configured by the communication processor 420 on the basis of the first delay time and may be a period during which the average of the delay time is identified. For example, the second time may be configured to increase as the first delay time increases and may be configured to decrease as the first delay time decreases. For example, the second time may be configured to have the size of multiples of the first delay time (for example, 5 times). When the application or the service requires a relatively shorter delay time, the first delay time may be configured to be shorter and the second time may also be configured to be shorter.

The average of the delay time measured by the electronic device 310 for the second time may be UL PDCP packet average delay defined in 3GPP TS 38.314 Version 16.3.0 (Release 16).

For example, the electronic device 310 may identify (or calculate) the average of the delay time on the basis of an equation defined in Table 4. 3.1.1-1 and Table 4.3.1.1-2 of 3GPP TS 38.314 Release 16.

The electronic device 310 determines whether to transmit the measurement report including the average of the delay time and the DRB information on the basis of whether the average of the delay time satisfies a predetermined condition in operation 740.

The predetermined condition may include a condition indicating that the average of the delay time is larger than a predetermined value. The predetermined value is a value determined on the basis of the first delay time, and may be configured to, for example, increase as the first delay time increases and decrease as the first delay time decreases. For example, the predetermined value may be configured to have the size corresponding to half the first delay time. When the application or the service requires a relatively lower delay time, the first delay time may be configured to be smaller and the predetermined value may also be configured to be smaller. Satisfying the predetermined condition may mean a situation in which a larger uplink grant is required since there is a possibility of the generation of a delay time longer than the delay time required to perform the service provided by the application.

The electronic device 310 may transmit the measurement report including the average of the delay time and the DRB information to the BS 320 on the basis of the average of the delay time satisfying the predetermined condition.

The electronic device 310 may determine to transmit the measurement report including the average of the delay time and the DRB information on the basis of the identified (calculated) average of the delay time satisfying the predetermined condition and control the communication circuit 430 to transmit the measurement report including the average of the delay time and the DRB information.

The DRB corresponding to the DRB information included in the measurement report may be a DRB to which a larger uplink grant is allocated. The BS 320 receiving the measurement report including the average of the delay time and the DRB information may perform an operation of allocating the larger uplink grants to the electronic device 310 on the basis of the measurement report, and the electronic device 310 may transmit data through the larger uplink grants, thereby implementing reduction in the delay time.

Through the above-described scheme, even though the indicator indicating that measurement and reporting of the delay time for data transmission are to be performed is not included in configuration information transmitted by the BS 320, the electronic device 310 may transmit the measurement report including the average of the delay time and the DRB information to the BS 320 and thus may implement allocation of larger uplink grants.

A method of operating an electronic device according to various embodiments of the disclosure may include: an operation of receiving information on one or more predetermined applications and information on a first delay time required to perform one or more predetermined services by the predetermined applications; an operation of determining whether to identify an average of a delay time generated by transmission of data related to the services, based on a result of comparison between a delay time generated by transmission of the data related to the predetermined services through at least one data radio bearer (DRB) and a first time determined based on the first delay time; an operation of identifying the average of the delay time, based on determination to identify the average; and an operation of determining whether to transmit a measurement report including the average of the delay time and DRB information, based on whether the average satisfies a predetermined condition.

In the method of operating the electronic device according to various embodiments of the disclosure, the operation of determining whether to identify the average of the delay time may include an operation of identifying the average of the delay time generated by transmission of the data related to the services through at least one data radio bearer (DRB), based on identification that the delay time generated by transmission of the data related to the predetermined services is longer than the first time determined based on the first delay time.

In the method of operating the electronic device according to various embodiments of the disclosure, the operation of identifying the average of the delay time may include an operation of identifying the average of the delay time generated by transmission of data related to the service for a second time determined based on the first delay time.

In the method of operating the electronic device according to various embodiments of the disclosure, the second time may be configured to be reduced as the first delay time decreases.

In the method of operating the electronic device according to various embodiments of the disclosure, the first time may be configured to be reduced as the first delay time decreases.

In the method of operating the electronic device according to various embodiments of the disclosure, the predetermined condition may include a condition indicating that the average of the delay time is larger than a predetermined value, and the predetermined value may be determined based on the first delay time.

The method of operating the electronic device according to various embodiments of the disclosure may further include: an operation of identifying whether the executed application is the predetermined application; and an operation of transmitting the information on the predetermined application and the first delay time to the communication processor, based on identification that the executed application is the predetermined application.

The method of operating the electronic device according to various embodiments of the disclosure may further include: an operation of, in case that predetermined services using the DRB are plural, selecting a shortest delay time among delay time required to perform the plurality of predetermined services; and an operation of determining the first time, based on the selected delay time.

The method of operating the electronic device according to various embodiments of the disclosure may further include: an operation of identifying a delay time generated by transmission of data related to another service while the another service, which is not the predetermined service, is transmitted through the DRB; and an operation of discarding transmission of the data, based on the identified delay time exceeding a configured time (PDCP discard timer).

In the method of operating the electronic device according to various embodiments of the disclosure, the predetermined service may include a service requiring a relatively short delay time.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (310) comprising:
a communication circuit (430) configured to transmit data or receive data through a network supporting cellular communication ;
an application processor (410); and
a communication processor (420),
wherein the communication processor (420) is configured to:
receive information on one or more predetermined applications and information on a first delay time required to perform one or more predetermined services by the one or more predetermined applications from the application processor (410);
determine whether to identify an average of a delay time generated by transmission of data related to a predetermined service of the one or more predetermined service, based on a result of comparison between a delay time generated by transmission of the data related to the predetermined service through at least one data radio bearer, DRB, and a first time determined based on the first delay time;
identify the average of the delay time, based on the determination to identify the average of the delay time; and
determine whether to transmit, to a base station, a measurement report including the average of the delay time and DRB information, based on whether the average of the delay time satisfies a predetermined condition.

2. The electronic device of claim 1, wherein the communication processor (420) is configured to identify the average of the delay time generated by transmission of the data related to the predetermined service through at least one data radio bearer. DRB, based on identification that the delay time generated by transmission of the data related to the predetermined service is longer than the first time determined based on the first delay time.

3. The electronic device of any of the preceding claims, wherein the communication processor (420) is configured to identify the average of the delay time generated by transmission of the data related to the services for a second time determined based on the first delay time.

4. The electronic device of claim 3, wherein the communication processor (420) is configured to reduce the second time as the first delay time decreases.

5. The electronic device of any of the preceding claims, wherein the communication processor (420) is configured to reduce the first time as the first delay time decreases.

6. The electronic device of any of the preceding claims, wherein the predetermined condition comprises a condition indicating that the average of the delay time is larger than a predetermined value, and
wherein the predetermined value is determined based on the first delay time.

7. The electronic device of any of the preceding claims, wherein the application processor (410) is configured to:
identify whether an executed application is the predetermined application, and
transmit the information on the predetermined application and the first delay time to the communication processor, based on identification that the executed application is the predetermined application.

8. The electronic device of any of the preceding claims, wherein the communication processor (420) is configured to:
in case that predetermined services using the DRB are plural, select a shortest delay time among delay time required to perform the plurality of predetermined services, and
determine the first time, based on the selected delay time.

9. The electronic device of any of the preceding claims, wherein the communication processor (420) is configured to:
identify a delay time generated by transmission of data related to another service while the another service, which is not the predetermined service, is transmitted through the DRB, and
discard transmission of the data, based on the identified delay time exceeding a configured time, for example, a PDCP discard timer.

10. The electronic device of any of the preceding claims, wherein the predetermined service comprises a service requiring a relatively short delay time.

11. A method performed by an electronic device, the method comprising:
receiving (710) information on one or more predetermined applications and information on a first delay time required to perform one or more predetermined services by the one or more predetermined applications;
determining (720) whether to identify an average of a delay time generated by transmission of data related to a predetermined service of the one or more predetermined service, based on a result of comparison between a delay time generated by transmission of the data related to the predetermined services through at least one data radio bearer, DRB, and a first time determined based on the first delay time;
identifying (730) the average of the delay time, based on the determination to identify the average of the delay time; and
determining (740) whether to transmit, to a base station, a measurement report including the average of the delay time and DRB information, based on whether the average satisfies a predetermined condition.

12. The method of claim 11, wherein the determining whether to identify the average of the delay time comprises identifying the average of the delay time generated by transmission of the data related to the predetermined service through at least one data radio bearer, DRB, based on the identification that the delay time generated by transmission of the data related to the predetermined service is longer than the first time determined based on the first delay time.

13. The method of any of the preceding claims, wherein the identifying of the average of the delay time comprises identifying the average of the delay time generated by transmission of data related to the service for a second time determined based on the first delay time.

14. The method of claim 13, wherein the second time is configured to be reduced as the first delay time decreases.

15. The method of any of the preceding claims, wherein the first time is configured to be reduced as the first delay time decreases.

## Patentansprüche

1. Elektronische Vorrichtung (310), umfassend:
eine Kommunikationsschaltung (430), die dazu konfiguriert ist, Daten über ein Netzwerk, das Mobilfunkkommunikation unterstützt, zu senden oder zu empfangen;
einen Anwendungsprozessor (410); und
einen Kommunikationsprozessor (420),
wobei der Kommunikationsprozessor (420) dazu konfiguriert ist:
Informationen über eine oder mehrere vorbestimmte Anwendungen und Informationen über eine erste Verzögerungszeit, die zur Durchführung eines oder mehrerer vorbestimmter Dienste durch die eine oder die mehreren vorbestimmten Anwendungen erforderlich ist, vom Anwendungsprozessor (410) zu empfangen;
zu bestimmen, ob ein Durchschnitt einer Verzögerungszeit identifiziert werden soll, die durch die Übertragung von Daten im Zusammenhang mit einem vorbestimmten Dienst des einen oder der mehreren vorbestimmten Dienste entsteht, basierend auf dem Ergebnis eines Vergleichs zwischen einer Verzögerungszeit, die durch die Übertragung der Daten im Zusammenhang mit dem vorbestimmten Dienst über mindestens einen Datenfunkträger, DRB, entsteht, und einer ersten Zeit, die auf der Grundlage der ersten Verzögerungszeit bestimmt wird;
den Durchschnitt der Verzögerungszeit auf der Grundlage der Bestimmung, den Durchschnitt der Verzögerungszeit zu identifizieren, zu identifizieren; und
zu bestimmen, ob ein Messbericht, der den Durchschnitt der Verzögerungszeit und DRB-Informationen enthält, an eine Basisstation gesendet werden soll, basierend darauf, ob der Durchschnitt der Verzögerungszeit eine vorbestimmte Bedingung erfüllt.

2. Elektronische Vorrichtung nach Anspruch 1, wobei der Kommunikationsprozessor (420) dazu konfiguriert ist, den Durchschnitt der Verzögerungszeit, die durch die Übertragung der Daten im Zusammenhang mit dem vorbestimmten Dienst über mindestens einen Datenfunkträger, DRB, entsteht, basierend auf der Identifizierung, dass die durch die Übertragung der Daten im Zusammenhang mit dem vorbestimmten Dienst entstehende Verzögerungszeit länger ist als die auf der Grundlage der ersten Verzögerungszeit bestimmte erste Zeit, zu identifizieren.

3. Elektronische Vorrichtung nach einem der vorstehenden Ansprüche, wobei der Kommunikationsprozessor (420) dazu konfiguriert ist, den Durchschnitt der Verzögerungszeit, die durch die Übertragung der Daten im Zusammenhang mit den Diensten entsteht, für eine auf der Grundlage der ersten Verzögerungszeit bestimmte zweite Zeit zu identifizieren.

4. Elektronische Vorrichtung nach Anspruch 3, wobei der Kommunikationsprozessor (420) dazu konfiguriert ist, die zweite Zeit zu reduzieren, wenn die erste Verzögerungszeit abnimmt.

5. Elektronische Vorrichtung nach einem der vorstehenden Ansprüche, wobei der Kommunikationsprozessor (420) dazu konfiguriert ist, die erste Zeit zu reduzieren, wenn die erste Verzögerungszeit abnimmt.

6. Elektronische Vorrichtung nach einem der vorstehenden Ansprüche, wobei die vorbestimmte Bedingung eine Bedingung umfasst, die angibt, dass der Durchschnitt der Verzögerungszeit größer als ein vorbestimmter Wert ist, und
wobei der vorbestimmte Wert auf der Grundlage der ersten Verzögerungszeit bestimmt wird.

7. Elektronische Vorrichtung nach einem der vorstehenden Ansprüche, wobei der Anwendungsprozessor (410) dazu konfiguriert ist:
zu identifizieren, ob eine ausgeführte Anwendung die vorbestimmte Anwendung ist, und
basierend auf der Identifizierung, dass die ausgeführte Anwendung die vorbestimmte Anwendung ist, die Informationen über die vorbestimmte Anwendung und die erste Verzögerungszeit an den Kommunikationsprozessor zu senden.

8. Elektronische Vorrichtung nach einem der vorstehenden Ansprüche, wobei der Kommunikationsprozessor (420) dazu konfiguriert ist:
für den Fall, dass es mehrere vorbestimmte Dienste gibt, die den DRB verwenden, die kürzeste Verzögerungszeit unter den zur Durchführung der mehreren vorbestimmten Dienste erforderlichen Verzögerungszeiten auszuwählen, und
die erste Zeit auf der Grundlage der ausgewählten Verzögerungszeit zu bestimmen.

9. Elektronische Vorrichtung nach einem der vorstehenden Ansprüche, wobei der Kommunikationsprozessor (420) dazu konfiguriert ist:
eine Verzögerungszeit, die durch die Übertragung von Daten im Zusammenhang mit einem weiteren Dienst entsteht, zu identifizieren, während der weitere Dienst, bei dem es sich nicht um den vorbestimmten Dienst handelt, über den DRB gesendet wird, und
basierend darauf, dass die identifizierte Verzögerungszeit eine konfigurierte Zeit überschreitet, beispielsweise einen PDCP-Verwerfungs-Timer, die Übertragung der Daten zu verwerfen.

10. Elektronische Vorrichtung nach einem der vorstehenden Ansprüche, wobei der vorbestimmte Dienst einen Dienst umfasst, der eine relativ kurze Verzögerungszeit erfordert.

11. Verfahren, das von einer elektronischen Vorrichtung durchgeführt wird, wobei das Verfahren Folgendes umfasst:
Empfangen (710) von Informationen über eine oder mehrere vorbestimmte Anwendungen und von Informationen über eine erste Verzögerungszeit, die zur Durchführung eines oder mehrerer vorbestimmter Dienste durch die eine oder die mehreren vorbestimmten Anwendungen erforderlich ist;
Bestimmen (720), ob ein Durchschnitt einer Verzögerungszeit identifiziert werden soll, die durch die Übertragung von Daten im Zusammenhang mit einem vorbestimmten Dienst des einen oder der mehreren vorbestimmten Dienste entsteht, basierend auf dem Ergebnis eines Vergleichs zwischen einer Verzögerungszeit, die durch die Übertragung der Daten im Zusammenhang mit den vorbestimmten Diensten über mindestens einen Datenfunkträger, DRB, entsteht, und einer ersten Zeit, die auf der Grundlage der ersten Verzögerungszeit bestimmt wird;
Identifizieren (730) des Durchschnitts der Verzögerungszeit auf der Grundlage der Bestimmung, den Durchschnitt der Verzögerungszeit zu identifizieren; und
Bestimmen (740), ob ein Messbericht, der den Durchschnitt der Verzögerungszeit und DRB-Informationen enthält, an eine Basisstation gesendet werden soll, basierend darauf, ob der Durchschnitt eine vorbestimmte Bedingung erfüllt.

12. Verfahren nach Anspruch 11, wobei das Bestimmen, ob der Durchschnitt der Verzögerungszeit identifiziert werden soll, das Identifizieren des Durchschnitts der durch die Übertragung der Daten im Zusammenhang mit dem vorbestimmten Dienst über mindestens einen Datenfunkträger, DRB, entstehenden Verzögerungszeit basierend auf der Identifizierung, dass die durch die Übertragung der Daten im Zusammenhang mit dem vorbestimmten Dienst entstehende Verzögerungszeit länger ist als die auf der Grundlage der ersten Verzögerungszeit bestimmte erste Zeit, umfasst.

13. Verfahren nach einem der vorstehenden Ansprüche, wobei das Identifizieren des Durchschnitts der Verzögerungszeit das Identifizieren des Durchschnitts der durch die Übertragung von Daten im Zusammenhang mit dem Dienst entstehenden Verzögerungszeit für eine auf der Grundlage der ersten Verzögerungszeit bestimmte zweite Zeit umfasst.

14. Verfahren nach Anspruch 13, wobei die zweite Zeit so konfiguriert ist, dass sie reduziert wird, wenn die erste Verzögerungszeit abnimmt.

15. Verfahren nach einem der vorstehenden Ansprüche, wobei die erste Zeit so konfiguriert ist, dass sie reduziert wird, wenn die erste Verzögerungszeit abnimmt.

## Revendications

1. Dispositif électronique (310) comprenant :
un circuit de communication (430) configuré pour transmettre des données ou recevoir des données par l'intermédiaire d'un réseau prenant en charge une communication cellulaire ;
un processeur d'application (410) ; et
un processeur de communication (420),
dans lequel le processeur de communication (420) est configuré pour :
recevoir, du processeur d'application (410), des informations concernant une ou plusieurs applications prédéterminées et des informations concernant un premier temps de retard requis pour effectuer un ou plusieurs services prédéterminés par les une ou plusieurs applications prédéterminées ;
déterminer s'il convient d'identifier une moyenne d'un temps de retard généré par une transmission de données relatives à un service prédéterminé parmi les un ou plusieurs services prédéterminés, sur la base d'un résultat de comparaison entre un temps de retard généré par une transmission des données relatives au service prédéterminé par l'intermédiaire d'au moins un porteur radio de données, DRB, et un premier temps déterminé sur la base du premier temps de retard ;
identifier la moyenne du temps de retard, sur la base de la détermination d'identifier la moyenne du temps de retard ; et
déterminer s'il convient de transmettre, à une station de base, un rapport de mesure comprenant la moyenne du temps de retard et des informations de DRB, sur la base du fait que la moyenne du temps de retard satisfait à une condition prédéterminée.

2. Dispositif électronique selon la revendication 1, dans lequel le processeur de communication (420) est configuré pour identifier la moyenne du temps de retard généré par la transmission des données relatives au service prédéterminé par l'intermédiaire d'au moins un porteur radio de données, DRB, sur la base de l'identification que le temps de retard généré par la transmission des données relatives au service prédéterminé est plus long que le premier temps déterminé sur la base du premier temps de retard.

3. Dispositif électronique selon l'une quelconque des revendications précédentes, dans lequel le processeur de communication (420) est configuré pour identifier la moyenne du temps de retard généré par la transmission des données relatives aux services pendant un second temps déterminé sur la base du premier temps de retard.

4. Dispositif électronique selon la revendication 3, dans lequel le processeur de communication (420) est configuré pour réduire le second temps à mesure que le premier temps de retard diminue.

5. Dispositif électronique selon l'une quelconque des revendications précédentes, dans lequel le processeur de communication (420) est configuré pour réduire le premier temps à mesure que le premier temps de retard diminue.

6. Dispositif électronique selon l'une quelconque des revendications précédentes, dans lequel la condition prédéterminée comprend une condition indiquant que la moyenne du temps de retard est supérieure à une valeur prédéterminée, et
dans lequel la valeur prédéterminée est déterminée sur la base du premier temps de retard.

7. Dispositif électronique selon l'une quelconque des revendications précédentes, dans lequel le processeur d'application (410) est configuré pour :
identifier si une application exécutée est l'application prédéterminée, et
transmettre les informations concernant l'application prédéterminée et le premier temps de retard au processeur de communication, sur la base de l'identification que l'application exécutée est l'application prédéterminée.

8. Dispositif électronique selon l'une quelconque des revendications précédentes, dans lequel le processeur de communication (420) est configuré pour :
dans le cas où des services prédéterminés utilisant le DRB sont pluriels, sélectionner un temps de retard le plus court parmi des temps de retards requis pour effectuer la pluralité de services prédéterminés, et
déterminer le premier temps, sur la base du temps de retard sélectionné.

9. Dispositif électronique selon l'une quelconque des revendications précédentes, dans lequel le processeur de communication (420) est configuré pour :
identifier un temps de retard généré par une transmission de données relatives à un autre service tandis que l'autre service, qui n'est pas le service prédéterminé, est transmis par l'intermédiaire du DRB, et
écarter la transmission des données, sur la base du fait que le temps de retard identifié dépasse un temps configuré, par exemple, une temporisation d'écartement PDCP.

10. Dispositif électronique selon l'une quelconque des revendications précédentes, dans lequel le service prédéterminé comprend un service requérant un temps de retard relativement court.

11. Procédé exécuté par un dispositif électronique, le procédé comprenant :
la réception (710) d'informations concernant une ou plusieurs applications prédéterminées et d'informations concernant un premier temps de retard requis pour effectuer un ou plusieurs services prédéterminés par les une ou plusieurs applications prédéterminées ;
la détermination (720) de savoir s'il convient d'identifier une moyenne d'un temps de retard généré par une transmission de données relatives à un service prédéterminé parmi les un ou plusieurs services prédéterminés, sur la base d'un résultat de comparaison entre un temps de retard généré par une transmission des données relatives aux services prédéterminés par l'intermédiaire d'au moins un porteur radio de données, DRB, et un premier temps déterminé sur la base du premier temps de retard ;
l'identification (730) de la moyenne du temps de retard, sur la base de la détermination d'identifier la moyenne du temps de retard ; et
la détermination (740) de savoir s'il convient de transmettre, à une station de base, un rapport de mesure comprenant la moyenne du temps de retard et des informations de DRB, sur la base du fait que la moyenne satisfait à une condition prédéterminée.

12. Procédé selon la revendication 11, dans lequel la détermination de savoir s'il convient d'identifier la moyenne du temps de retard comprend l'identification de la moyenne du temps de retard généré par la transmission des données relatives au service prédéterminé par l'intermédiaire d'au moins un porteur radio de données, DRB, sur la base de l'identification que le temps de retard généré par la transmission des données relatives au service prédéterminé est plus long que le premier temps déterminé sur la base du premier temps de retard.

13. Procédé selon l'une quelconque des revendications précédentes, dans lequel l'identification de la moyenne du temps de retard comprend l'identification de la moyenne du temps de retard généré par la transmission de données relatives au service pendant un second temps déterminé sur la base du premier temps de retard.

14. Procédé selon la revendication 13, dans lequel le second temps est configuré pour être réduit à mesure que le premier temps de retard diminue.

15. Procédé selon l'une quelconque des revendications précédentes, dans lequel le premier temps est configuré pour être réduit à mesure que le premier temps de retard diminue.
